# EUROPÄISCHE PATENTSCHRIFT

(11) **EP 4 257 535 B1**
(45) Veröffentlichungstag und Bekanntmachung des Hinweises auf die Patenterteilung: **19.02.2025**
(21) Anmeldenummer: 23166569.6
(22) Anmeldetag: 04.04.2023
(51) Int. Cl.: B66F 3/06, F16G 13/20

(54) **SCHUBKETTE, ANTRIEBSVORRICHTUNG UND HEBEBÜHNE**
THRUST CHAIN, DRIVE DEVICE AND LIFTING PLATFORM
CHAÎNE DE POUSSÉE, DISPOSITIF D'ENTRAÎNEMENT ET PLATEFORME DE LEVAGE

(30) Priorität: 05.04.2022 DE 102022108095
(43) Veröffentlichungstag der Anmeldung: 11.10.2023
(73) Patentinhaber: Grob GmbH, 74889 Sinsheim (DE)
(72) Erfinder: Özer, Cetin, 69412 Eberbach (DE); Hönig, Marc-André, 74924 Neckarbischofsheim (DE)
(74) Vertreter: Altmann Stößel Dick Patentanwälte PartG mbB

(56) Entgegenhaltungen:
- EP-B1- 1 006 074
- DE-A1- 102012 214 270
- US-A- 5 156 574

## Beschreibung

### Technisches Gebiet

Die Erfindung betrifft eine Schubkette mit Kettengliedern, die durch Gelenke miteinander verbunden sind und Anschlagflächen aufweisen, wodurch beim Anschlag eine gerade Ausrichtung der Kettenglieder erfolgt, aber die Kettenglieder in der anderen Richtung zueinander verschwenkbar sind und wobei die Kettenglieder Eingriffselemente für einen Ritzelantrieb aufweisen.

### Technischer Hintergrund

Schubketten werden vielfach als Kraftübertragungsglieder eingesetzt, wobei diese insbesondere Hubbereiche überspannen müssen, in denen sie lang, gestreckt und in der Regel ungeführt verlaufen. Über einen Antrieb wird eine Kraft auf die Kette aufgebracht, die vorwiegend in einer Druckrichtung auf ein an die Kette angeschlossenes Element übertragen wird. Der Antrieb ist meist ein Ritzelantrieb, bei dem mindestens ein Ritzel in die Schubkette eingreifend diese antreibt, wobei im Eingriffsbereich des oder der Ritzel eine Gegenkraft, meist in Form einer Kulissenführung die Schubkette im Eingriffsbereich hält.

Ein häufiger Anwendungsbereich sind Hebebühnen, die beispielsweise von mehreren Schubketten getragen werden können, welche durch die Anzahl und eine sich gegenseitig stützende Anordnung der Schubketten in stabiler Weise die gewünschte Höhenposition einnehmen.

### Grundsätzlich gibt es zwei Arten von Schubketten:

Bei der einen sind die Kettenglieder flache Laschen in parallelen Reihen, die ähnlich einer Fahrradkette, durch Gelenke verbunden sind. Um als Schubkette zu dienen, müssen die Laschen dann Anschlagflächen für die gestreckte Ausrichtung aufweisen, wie dies beispielsweise aus der EP 1 006 074 B1 bekannt ist. Eine hohe Stabilität bei großen Kräften kann dadurch nicht erzielt werden

Bei der anderen Art von Schubketten sind im wesentlichen U-förmige Kettenglieder vorgesehen, die sich in der Stützfunktion der Schubkette aufeinander abstützen.

Aus der DE 198 05 157 A1, der DE 10 2016 110 949 B4 und einer Ausführungsform der DE 20 2014 004 827 U1 sind solche Schubketten bekannt, wobei innerhalb der U-förmigen Kettenglieder Verbindungslaschen eingefügt sind, welche die U-förmigen Kettenglieder mittels Gelenken miteinander verbinden. Die Stabilität gegen ein seitliches Ausweichen der Schubkette im gestreckten Zustand wird hier nur über die Gelenke und Verbindungsglieder erzielt, was bei hohen Kräften und hohen Stabilitätsanforderungen, insbesondere gegenüber einem Ausknicken, unzureichend ist.

Die DE 10 2014 007 458 B4 sowie Ausführungsformen der DE 20 2014 004 827 U1 ersparen sich die Verbindungslaschen durch die Ausbildung der U-förmigen Kettenglieder mit gekröpften Laschen, wobei die Kettenglieder von den gekröpften Laschen des nachfolgenden U-förmigen Kettenglieds umfasst werden. Dies erzeugt zwar eine höhere Stabilität als beim vorgenannten Stand der Technik, ist jedoch wegen der Kröpfung mit einer aufwendigen und teuren Herstellung verbunden.

Die DE 10 2012 214 270 A1, die eine Schubkette gemäß dem Oberbegriff des Anspruchs 1 offenbart, schlägt eine Schubkette aus gleichartigen U-förmigen Kettengliedern vor, die durch an das U angefügte Laschen miteinander verbunden sind. Diese Verbindung kommt jedoch nur dadurch ohne eine Kröpfung aus, dass die Kettenglieder wechselweise gegeneinander versetzt angeordnet sind. Durch diesen gegenseitigen Versatz kann jedoch keine Versteifung durch eine sich gegenseitig stabilisierende Anlage der Flächen der U-Schenkel und der Laschen an das nachfolgende Kettenglied erzielt werden. Es fehlt ein Ineinandergreifen der Flächen aufeinanderfolgender Kettenglieder, wie das bei den Kröpfungen der Kettenglieder der DE 10 2014 007 458 B4 der Fall ist, indem ein Kettenglied das andere umgreift. Daher wird auch bei dieser Schubkette die Stabilität, insbesondere gegen Ausknicken, im Wesentlichen nur durch die Gelenke erzielt, was verschleißanfällig ist, weil der Flächenkontakt dadurch verlorengeht.

### Aufgabe der Erfindung

Der Erfindung liegt daher gegenüber dem genannten Stand der Technik die Aufgabe zugrunde, eine einfach herzustellende Schubkette verfügbar zu machen, die auch über große ungeführte Hublängen hohe Kräfte aufnehmen kann und dabei stabil bleibt.

### Allgemeine Beschreibung der Erfindung

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

Bei einer Schubkette der eingangs genannten Art wird dies dadurch erzielt, dass U-förmige äußere Kettenglieder und U-förmige innere Kettenglieder ineinandergreifend angeordnet sind, wobei die inneren Kettenglieder mit ihren Außenseiten an den Innenseiten der äußeren Kettenglieder anliegen, und wobei die Kettenglieder zur Hälfte ihrer Längsausdehnung eine vollständige U-Form aufweisen, zur anderen Hälfte der Längsausdehnung die Schenkel des U in Längsrichtung auskragende Laschen aufweisen, dass Gelenke sowohl in den Schenkeln als auch in den Laschen derart gelagert sind, dass jedes Gelenk ein äußeres Kettenglied mit einem inneren Kettenglied beweglich verbindet, und dass durch die Abmessungen der Kettenglieder sich diese im gestreckten Zustand der Schubkette mit den Anschlagflächen an den Basen der U abstützen, und sich gleichzeitig alle äußeren Kettenglieder und alle inneren Kettenglieder mit ihren jeweiligen Anschlagflächen an den Schenkeln der U auf den Anschlagflächen der Laschen des nachfolgenden Kettenglieds abstützen.

Der Vorteil der erfindungsgemäßen Schubkette besteht zum einen in den großen gegenseitigen Auflageflächen der Kettenglieder bei der Stützfunktion, die sowohl die Basen der U-Formen der inneren und der äußeren Kettenglieder umfassen, als auch die Außenkanten der Schenkel dieser U-Formen beziehungsweise der Laschen. Außerdem liegen die Schenkel der U-Formen sowie die Laschen aneinander an, wobei die äußeren Kettenglieder die inneren umfassen, so dass es zu stabilen unverrückbaren Flächenanlagen kommt, die praktisch nicht durch Verschleiß beeinträchtigt werden können. Dies führt zu einer gegenseitigen Stützung und Zentrierung, welche ein seitliches Ausknicken in höchstem Maße verhindern. Dies alles wird mittels Kettengliedern erreicht, die in einfachen U-Formen ohne jegliche Kröpfungen oder sonstige aufwendig herzustellende Formgebungen herstellbar sind.

### Zweckmäßige Weiterbildungen sind aus den Unteransprüchen entnehmbar:

Zweckmäßigerweise ist vorgesehen, dass als Eingriffselemente für den Ritzelantrieb auf den Gelenkbolzen Innenrollen und Außenrollen angeordnet sind, die an die Schenkel und Laschen auf jeder Seite der U-Form angrenzen. Dadurch kann der Ritzelantrieb derart ausgestattet sein, dass zwei Doppelkettenräder zum Eingriff in die Innenrollen und die Außenrollen kommen. Auf diese Weise lassen sich sehr hohe Kräfte von dem Ritzelantrieb auf die Kettenglieder übertragen.

Bei einer bevorzugten Weiterbildung kann auf jedem Gelenkbolzen mindestens eine Innenrolle und bevorzugt mindestens zwei Innenrollen an die Schenkel und Laschen auf jeder Seite der U-Form angrenzend angeordnet sein. Alternativ oder zusätzlich kann auf jedem Gelenkbolzen mindestens eine Außenroll und bevorzugt mindestens zwei Außenrollen an die Schenkel und Laschen auf jeder Seite der U-Form angrenzend angeordnet sein. Mit anderen Worten kann jeder Gelenkbolzen insgesamt mindestens zwei oder bevorzugt mindesten vier Innenrollen und/oder insgesamt mindestens zwei oder bevorzugt mindesten vier Außenrollen tragen, die beidseitig an die Schenkel und Laschen angrenzen. Durch den Einsatz von zwei Innenrollen und zwei Außenrollen auf jeder Seite der Schenkel und Laschen ist durch diese spezielle Anordnung der Rollen möglich die Krafteinleitung zu verteilen und so die Geometrie entsprechend Kompakt zu gestalten.

Eine dem Ritzelantrieb gegenüberliegende Kulissenführung erzeugt dabei zweckmäßigerweise eine Gegenkraft, die die Kette in ihrer Position stabilisiert.

In Teilbereichen, in der Regel außerhalb des Hubbereichs, ist es vorteilhaft, die Schubkette durch Führungsschienen zu führen. Solche Führungen können an geraden Teilbereichen oder auch gekrümmt verlaufen und sowohl an der Kraftbeaufschlagungsseite als auch vor dem Ritzeleingriff vorgesehen sein. Dabei sind sowohl Führungsschienen für die Außenrollen möglich, es sind aber auch an der Basis der U-Formen der äußeren und/oder inneren Kettenglieder angeordnete Führungselemente denkbar, die in Führungsschienen verlaufen. Solche Führungselemente und Führungsschienen können, beispielsweise beidseitig der Schubketten verlaufende Nutführungen sein.

Vor der Krafteinleitung durch den Ritzelantrieb können solche Führungsschienen als Kettenspeicher ausgebildet sein und gerade, gekrümmt oder wechselweise gerade und gekrümmt, also mäanderförmig verlaufen.

Um eine Lastanhebung zu stabilisieren, ist es zweckmäßig, dass eine Schubkette mit mindestens einer weiteren gleichgearteten Schubkette synchronisiert zusammenwirkt, wobei diese zwei Schubketten sich dadurch gegenseitig stabilisieren, dass sie entgegengesetzt verschwenkbar sind. Ein Zusammenwirken von vier synchronisierten Schubketten kann dabei in optimalster Weise eine Hebebühne oder ähnliches betätigen.

Selbstverständlich kann eine Schubkette jedoch auch einzeln eingesetzt werden, beispielsweise wenn eine zu bewegende Last noch anderweitig geführt wird. Auch mehr als vier Schubketten sind denkbar.

In einem weiteren Aspekt wird eine Antriebsvorrichtung vorgeschlagen. Die Antriebsvorrichtung umfasst mindestens eine Schubkette nach einer der vorstehend beschriebenen oder nachstehend beschriebenen Ausführungsformen, und mindestens einen Ritzelantrieb. Der Ritzelantrieb greift in die Eingriffselemente der Schubkette ein und ist zum Antreiben der Schubkette ausgebildet.

Bei einer Weiterbildung können als Eingriffselemente auf den Gelenkbolzen, an die Schenkel und Laschen auf jeder Seite der U-Form angrenzende, Innenrollen und Außenrollen angeordnet sein. Der Ritzelantrieb kann aus zwei Doppelkettenrädern zum Eingriff in die Innenrollen und in die Außenrollen bestehen.

In einem weiteren Aspekt wird ein System, vorgeschlagen, das eine Hebebühne und eine Antriebsvorrichtung nach einer der vorstehend beschriebenen oder nachstehend beschriebenen Ausführungsformen umfasst. Die Antriebsvorrichtung ist zum wahlweisen Heben oder Senken der Hebebühne ausgebildet.

In einem weiteren Aspekt wird eine Verwendung einer Schubkette und/oder einer Antriebsvorrichtung zum wahlweisen Heben oder Senken einer Hebebühne vorgeschlagen.

Der Begriff "Schubkette", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein mechanisches Bauteil der Fördertechnik beziehen, das im spannungslosen Zustand aufgerollt werden kann, unter Spannung jedoch Schub- und Druckkräfte übertragen kann. Schubketten sind wichtige Bauelemente in der linearen Antriebstechnik. Sie entwickeln ihre wahre Stärke dort, wo andere Produkte wie Hubgetriebe aus Platzgründen ausscheiden. Üblicherweise werden in der Antriebstechnik Lasten durch Zug oder Druck bewegt. Die Schubkette kann Lasten durch Zug und Druck bewegen. Sie besteht aus speziell geformten hoch präzisen und mechanischen Kettengliedern. Die Kettenglieder greifen formschlüssig fortlaufend ineinander über. Die Schubkette kann somit ziehen und "schieben".

Der Begriff "Ritzelantrieb", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Antrieb mit mindesten einem Ritzel oder Kettenrad beziehen. Der Ritzelantrieb weist üblicherweise ein Antriebsgehäuse auf, in dem das Ritzel angeordnet ist, welches in die Zwischenglieder der Schubkette eingreift und die Kette Glied um Glied bewegt - sowohl vor als auch zurück. Die Kette selbst hat zwei lose Enden. Am einen Ende wird die zu bewegende Last befestigt. Das andere Ende kann frei geführt werden und wird in der Regel in einem Speicher aufgerollt. Dies spart enorm viel Einbauplatz und ist der Hauptvorteil der Schubkette. Würden mit einem "normalen" Hubgetriebe gearbeitet werden, bräuchte man viel mehr Einbauraum für den Spindelhub. Über ein Antriebselement, in der Regel ein Elektromotor, wird Schubkraft auf die Kettenglieder eingeleitet. Jetzt drücken die Schultern der einzelnen Kettenglieder gegeneinander und bilden eine starre Einheit. Und damit können sie die Last heben oder schieben.

Zusammenfassend werden, ohne Beschränkung weiterer möglicher Ausgestaltungen, folgende Ausführungsformen vorgeschlagen:
Ausführungsform 1: Schubkette mit Kettengliedern, die durch Gelenke miteinander verbunden sind und Anschlagflächen aufweisen, wodurch beim Anschlag eine gerade Ausrichtung der Kettenglieder erfolgt, aber die Kettenglieder in der anderen Richtung zueinander verschwenkbar sind und wobei die Kettenglieder Eingriffselemente für einen Ritzelantrieb aufweisen,
   wobei U-förmige äußere Kettenglieder und U-förmige innere Kettenglieder ineinandergreifend angeordnet sind, wobei die inneren Kettenglieder mit ihren Außenseiten an den Innenseiten der äußeren Kettenglieder anliegen, und wobei die Kettenglieder zur Hälfte ihrer Längsausdehnung eine vollständige U-Form aufweisen, zur anderen Hälfte der Längsausdehnung die Schenkel des U in Längsrichtung auskragende Laschen aufweisen, dass Gelenke sowohl in den Schenkeln als auch in den Laschen derart gelagert sind, dass jedes Gelenk ein äußeres Kettenglied mit einem inneren Kettenglied beweglich verbindet, und dass durch die Abmessungen der Kettenglieder sich diese im gestreckten Zustand der Schubkette mit den Anschlagflächen an den Basen der U abstützen, und sich gleichzeitig alle äußeren Kettenglieder und alle inneren Kettenglieder mit ihren jeweiligen Anschlagflächen an den Schenkeln der U auf den Anschlagflächen der Laschen des nachfolgenden Kettenglieds abstützen.
Ausführungsform 2: Schubkette nach Ausführungsform 1,
   wobei als Eingriffselemente auf den Gelenkbolzen, an die Schenkel und Laschen auf jeder Seite der U-Form angrenzende, Innenrollen und Außenrollen angeordnet sind.
Ausführungsform 3: Schubkette nach Ausführungsform 2,
   wobei der Ritzelantrieb aus zwei Doppelkettenrädern zum Eingriff in die Innenrollen und in die Außenrollen besteht.
Ausführungsform 4: Schubkette nach Ausführungsform 2 oder 3, wobei auf jedem Gelenkbolzen, an die Schenkel und Laschen auf jeder Seite der U-Form angrenzend, mindestens eine Innenrolle und bevorzugt mindestens zwei Innenrollen und mindestens eine Außenrolle und bevorzugt mindestens zwei Außenrollen angeordnet sind.
Ausführungsform 5: Schubkette nach einer der Ausführungsformen 1 bis 4,
   wobei dem Ritzelantrieb zur Erzeugung einer Gegenkraft eine Kulissenführung gegenüberliegt.
Ausführungsform 6: Schubkettenach einer der Ausführungsformen 1 bis 5,
   wobei die Schubkette in Teilbereichen ihrer Bewegungsbahn durch fest angeordnete Führungsschienen geführt ist, die gerade oder in Schwenkrichtung gekrümmt verlaufen können.
Ausführungsform 7: Schubkette nach Ausführungsform 6,
   wobei es sich bei den Führungsschienen um Bahnen für die Außenrollen handelt.
Ausführungsform 8: Schubkette nach Ausführungsform 6,
   wobei an der Basis der U-Formen der äußeren und/oder inneren Kettenglieder Führungselemente angeordnet sind, die in Führungsschienen verlaufen.
Ausführungsform 9: Schubkette nach Ausführungsform 8,
   wobei die Führungselemente und die Führungsschienen beidseitig der Schubkette verlaufende Nutführungen sind.
Ausführungsform 10: Schubkette nach einer der Ausführungsformen 6 bis 9,
   wobei Führungsschienen vor der Krafteinleitung durch den Ritzelantrieb als Kettenspeicher ausgebildet sind, die gerade, gekrümmt oder wechselweise gerade und gekrümmt verlaufen können.
Ausführungsform 11: Schubkette nach einer der Ausführungsformen 1 bis 10,
   wobei sie mit mindestens einer weiteren gleichgearteten Schubkette synchronisiert zusammenwirkt, wobei diese zwei Schubketten sich dadurch gegenseitig stabilisieren, dass sie entgegengesetzt verschwenkbar sind.
Ausführungsform 12: Schubkette nach Ausführungsform 11,
   wobei vier Schubketten synchronisiert zusammenwirken.
Ausführungsform 13: Antriebsvorrichtung, umfassend
   mindestens eine Schubkette nach einer der vorhergehenden Ausführungsformen, und
   mindestens einen Ritzelantrieb, wobei der Ritzelantrieb in die Eingriffselemente der Schubkette eingreift und zum Antreiben der Schubkette ausgebildet ist.
Ausführungsform 14: Antriebsvorrichtung nach der vorhergehenden Ausführungsform, wobei als Eingriffselemente auf den Gelenkbolzen, an die Schenkel und Laschen auf jeder Seite der U-Form angrenzende, Innenrollen und Außenrollen angeordnet sind, wobei der Ritzelantrieb aus zwei Doppelkettenrädern zum Eingriff in die Innenrollen und in die Außenrollen besteht.
Ausführungsform 15: System, umfassend eine Hebebühne und eine Antriebsvorrichtung nach einem der beiden vorhergehenden Ausführungsformen, wobei die Antriebsvorrichtung zum wahlweisen Heben oder Senken der Hebebühne ausgebildet ist.

### Kurze Beschreibung der Figuren

Die Zeichnung zeigt die Erfindung sowie mögliche Weiterbildungen derselben. Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Es zeigen:
- **Fig. 1**: die erfindungsgemäße Schubkette in perspektivischer Ansicht von der Seite, in die eine Schwenkung der Kettenglieder erfolgen kann, und
- **Fig. 2**: in perspektivischer Ansicht von der Seite, auf der die Anschläge eine gerade Ausrichtung bewirken,
- **Fig. 3**: die Anschlagflächen zur Kraftübertragung durch die Kettenglieder,
- **Fig. 4**: die Krafteinleitung durch Doppelkettenräder,
- **Fig. 5**: eine Schubkette mit Ritzelantrieb,
- **Fig. 6**: eine Ausgestaltung einer Führungsschiene,
- **Fig. 7**: eine weitere Ausgestaltung einer Führungsschiene
- **Fig. 8**: einen Kettenspeicher,
- **Fig. 9**: den Kettenspeicher in einem geschlossenen und mit dem Ritzelantrieb verbundenen Zustand,
- **Fig. 10**: eine weitere Ausführungsform der erfindungsgemäßen Schubkette in einer Innenansicht,
- **Fig. 11**: die Schubkette der Fig. 10 in perspektivischer Ansicht,
- **Fig. 12**: eine perspektivische Ansicht der Schubkette der weiteren Ausführungsform der Fig. 10 und 11 mit dem Doppelkettenräder aufweisenden Ritzelantrieb einer Antriebsvorrichtung,
- **Fig. 13**: eine Umlenkung eines Kettenspeichers mit geschlossenem Gehäuse und
- **Fig. 14**: die Umlenkung des Kettenspeichers der Fig. 13 mit teilweise geöffnetem Gehäuse.

### Beschreibung der Ausführungsbeispiele

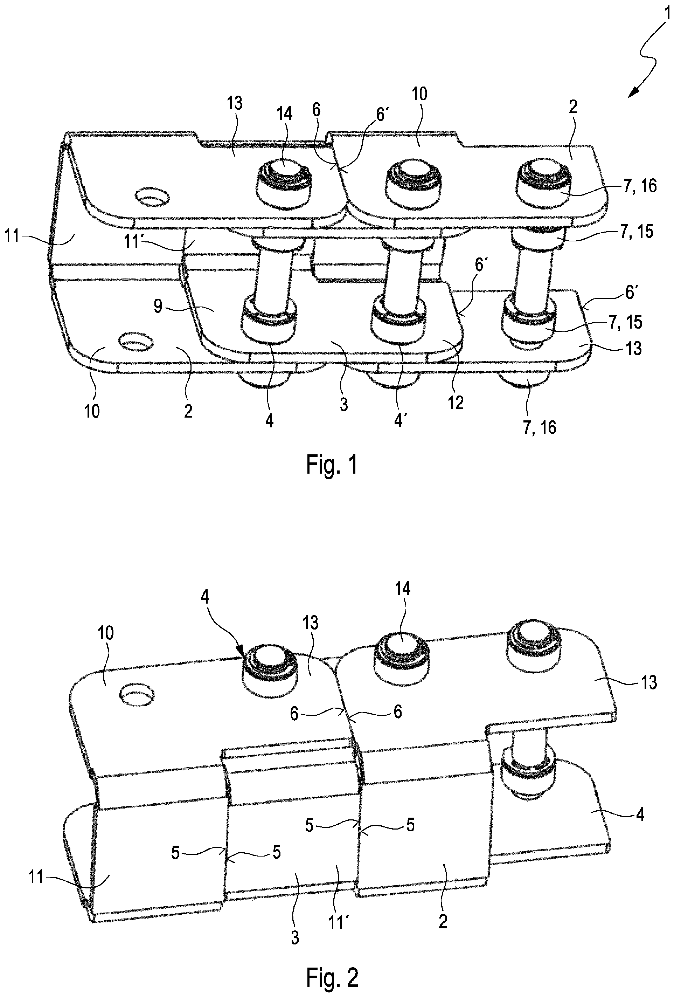

**Fig. 1** und **Fig. 2** zeigen die erfindungsgemäße Schubkette 1 in perspektivischer Ansicht, wobei Fig. 1 die Schubkette 1 mit Blick von der Seite zeigt, in die eine Schwenkung der Kettenglieder 2, 3 erfolgen kann, und Fig. 2 von der Seite, auf der die Anschläge eine gerade Ausrichtung bewirken.

Die Schubkette 1 besteht aus U-förmigen inneren Kettengliedern 3, die von U-förmigen äußeren Kettengliedern 2 umfasst werden, wobei deren Außen- und Innenflächen satt, aber die Schwenkbewegung zulassend, aneinanderliegen. Sowohl die äußeren 2 als auch die inneren Kettenglieder 3 bilden zur Hälfte ihrer Längsausdehnung ein vollständige U-Form 11, 11', an die sich jeweils seitlich der Schenkel 9, 10 des U Laschen 12 und 13 anschließen. Die Gelenke 4 sind sowohl in den Schenkeln 9, 10 der U-Formen 11, 11' als auch in den an diese angefügten Laschen 12 und 13 gelagert. Dabei verbindet ein Gelenk 4 die Laschen 13 eines äußeren Kettenglieds 2 mit den Schenkeln 9 des inneren Kettenglieds 3. Beim nächsten Gelenk 4' ist es umgekehrt, mit diesem werden die Laschen 12 des inneren Kettenglieds 3 mit den Schenkeln 10 des nächsten äußeren Kettenglieds 2 verbunden. Und so setzt sich dies entlang der gesamten Schubkette 1 fort. Die Gelenke 4, 4' umfassen Gelenkbolzen 14.

Dabei sind die Abmessungen der Kettenglieder 2, 3 derart, dass sich im gestreckten Zustand der Schubkette 1 alle Kettenglieder 2, 3 an den Basen der U mit den Anschlagflächen 5 gegenseitig abstützen. Gleichzeitig stützen sich auch alle äußeren Kettenglieder 2 und alle inneren Kettenglieder 3 mit ihren jeweiligen Anschlagflächen 6 an den Schenkeln 9, 10 der U auf den Anschlagflächen 6' an den Laschen 12, 13 des nachfolgenden Kettenglieds 2, 3 ab.

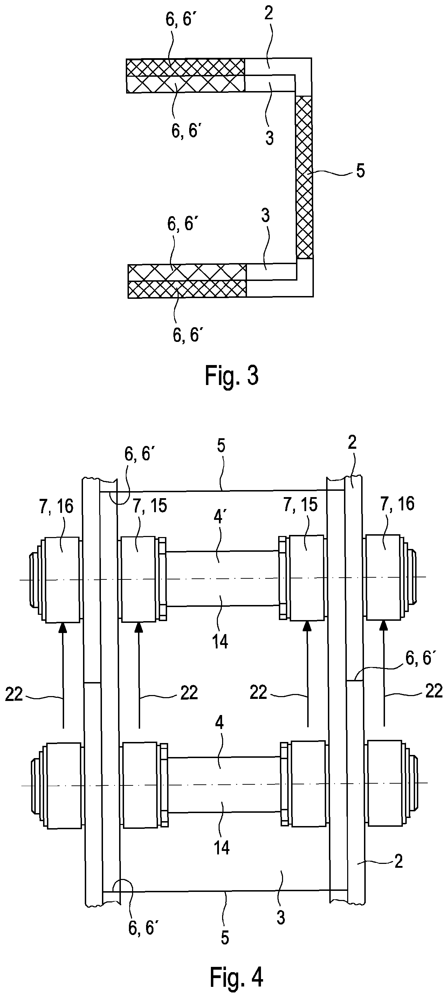

Diese Abstützung wird nochmals durch die **Fig. 3** verdeutlicht, welche in Doppelschraffur die Anschlagflächen 5 an den Basen der U sowohl der inneren Kettenglieder 3 als auch der äußeren Kettenglieder 2 zeigt. Außerdem ist zu sehen, wie sich alle inneren Kettenglieder 3 und alle äußeren Kettenglieder 2 durch ihre Anschlagflächen 6 an den Schenkeln 9, 10 der U und durch ihre Anschlagflächen 6' an den Laschen 12, 13 abstützen. Dabei treffen immer die Anschlagflächen 6 der Schenkel 10 der äußeren Kettenglieder 2 auf die Anschlagflächen 6` der Laschen 13 der nächsten äußeren Kettenglieder 2 und die Anschlagflächen 6 der Schenkel 9 der inneren Kettenglieder 3 auf die Anschlagflächen 6` der Laschen 12 der nächsten inneren Kettenglieder 3. Auf diese Weise wird eine einfache Abstützung aller Kettenglieder 2, 3 durch die Anschlagflächen 5 an den Basen der U-Formen 11, 11' dadurch ergänzt, dass sich auch alle inneren Kettenglieder 3 und alle äußeren Kettenglieder 2 durch ihre Anschlagflächen 6, 6' abstützen. Dadurch, dass die U-Formen jeweils ohne Abkröpfung gerade ausgebildet sind, wird auch eine hohe Steifigkeit mit geringster Ausknickungstendenz für sehr hohe Kräfte erzielt.

**Fig. 4** zeigt mit den Pfeilen 22 eine Krafteinleitung auf die Eingriffselemente 7, nämlich die Innenrollen 15 und Außenrollen 16 der Gelenke 4, 4`, durch Doppelkettenräder eines in Fig. 4 nicht näher gezeigten Ritzelantriebs. Die Innenrollen 15 und Außenrollen 16 sind an die Schenkel 9, 10 und Laschen 12, 13 auf jeder Seite der U-Form angrenzend angeordnet. Gemäß der Darstellung der Fig. 4 ist an jedem Ende eines jeden Gelenkbolzens 14 jeweils eine Innenrolle 15 und eine Außenrolle 16 derart angeordnet, dass sie die Schenkel 9, 10 und Laschen 12, 13 zwischen sich aufnehmen. Durch ihren Eingriff sowohl in die Innenrollen 15 als auch in die Außenrollen 16 auf jeder Seite der U-Formen 11, 11` der inneren Kettenglieder 3 und äußeren Kettenglieder 2 wird eine ausgewogene Krafteinleitung in die Schubkette 1 erzielt, welche - wie in Fig. 3 dargestellt - mit den Anschlagflächen 5 und 6, 6' eine gut ausgewogene Weitervermittlung der eingeleiteten Kraft 22 an die nachfolgenden und weiteren Kettenglieder 2, 3 aufweist.

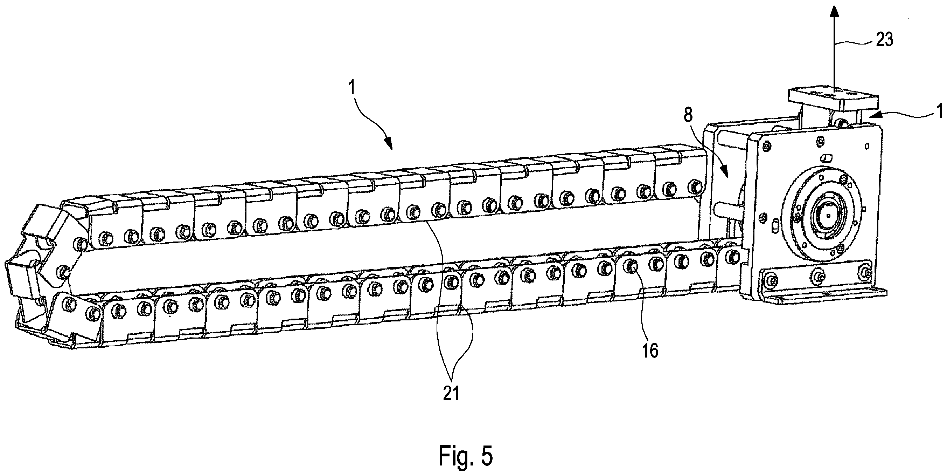

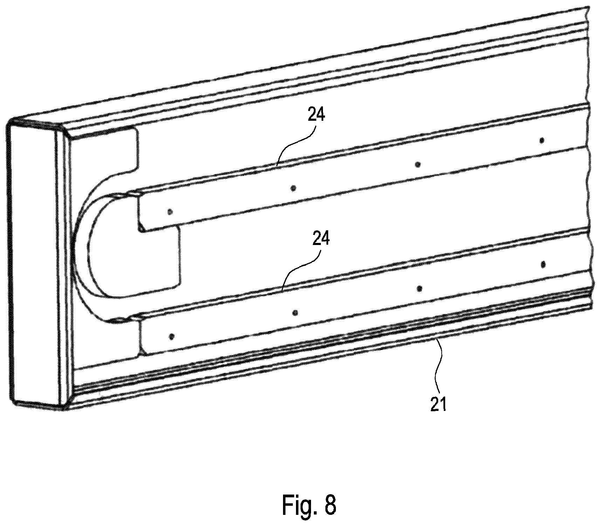

**Fig. 5** zeigt eine Schubkette 1 mit dem die Doppelkettenräder aufweisenden Ritzelantrieb 8 einer Antriebsvorrichtung. Nachfolgend an die Krafteinleitung 22 durch den Ritzelantrieb 8 wird die Schubkette 1 bei üblicher Ausgestaltung in ihren gestreckten Zustand verbracht, in dem sie vertikal ausgerichtet gemäß dem Pfeil 23 eine Last hebt. Vor dem Ritzelantrieb 8 befindet sich ein Kettenspeicher 21, der hier ohne Führung dargestellt ist. Eine solche kann ein Kettenspeicher 21 gemäß Fig. 8 mit einer Führung für die Außenrollen 16 sein.

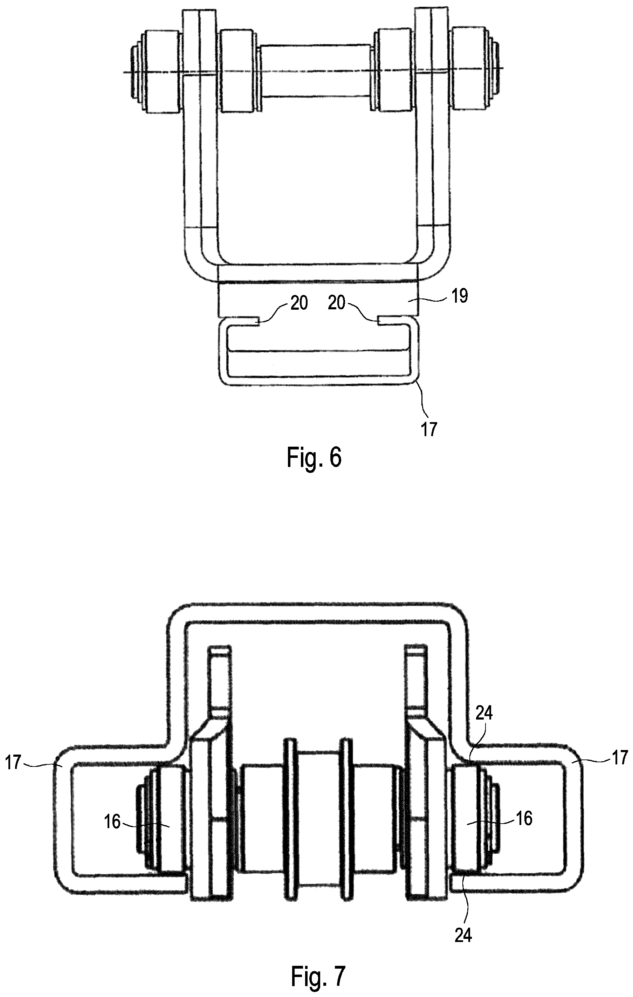

**Fig. 6** zeigt eine Ausgestaltung für eine Führungsschiene 17, die in nicht dargestellter Weise fest angebracht ist. Diese Führungsschiene 17 ist derart ausgestaltet, dass sie mit Führungselementen 19 zusammenwirkt, die an den Basen der U der inneren Kettenglieder 3 und/oder äußeren Kettenglieder 2 angebracht sind. Die Führung der Schubkette 1 ist hier als beidseitige Nutführungen 20 ausgebildet.

**Fig. 7** zeigt eine weitere Ausgestaltung einer Führungsschiene 17, die mit Laufbahnen 24 zur Führung der Außenrollen 16 ausgebildet ist.

**Fig. 8** zeigt einen Kettenspeicher 21, der die Außenrollen 16 eines Kettenspeichers 21 gemäß Fig. 5 mittels Laufbahnen 24 führt und so die für mögliche Hübe erforderliche Schubkette 1 speichert.

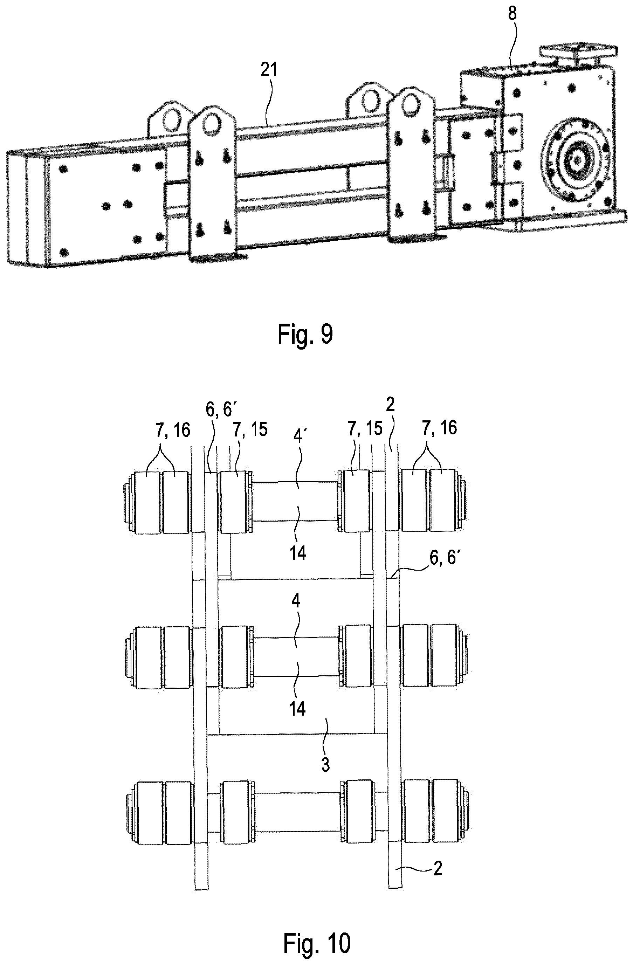

**Fig. 9** zeigt den Kettenspeicher 21 in einem geschlossenen und mit dem Ritzelantrieb 8 verbundenen Zustand. Wie in Fig. 9 zu erkennen, ist die Schubkette 1 von dem Kettenspeicher 21 allseitig umschlossen.

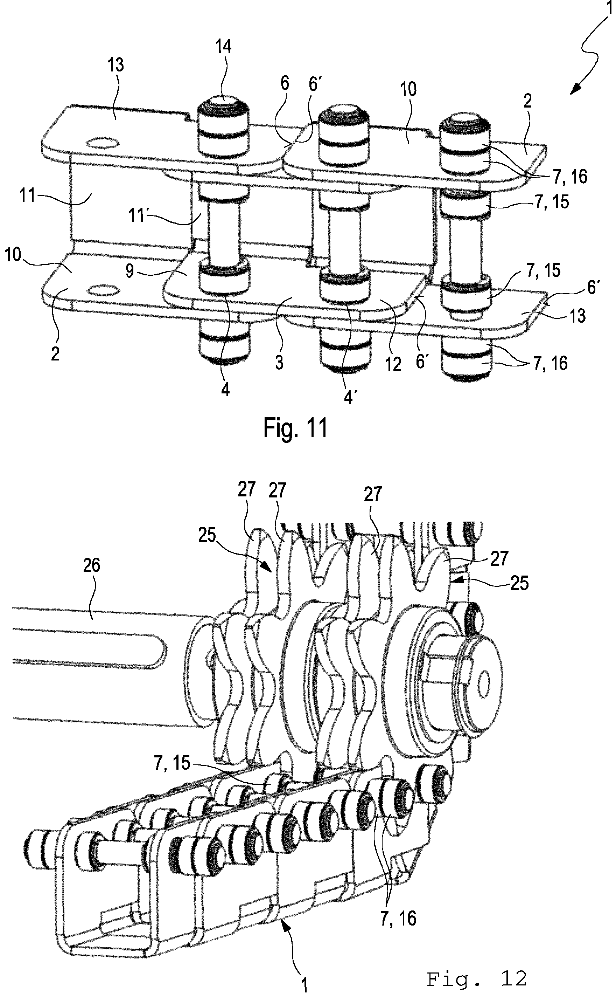

**Fig. 10** zeigt eine weitere Ausführungsform der erfindungsgemäßen Schubkette 1 in einer Innenansicht. **Fig. 11** zeigt die Schubkette 1 der Fig. 10 in perspektivischer Ansicht. Nachstehend werden lediglich die Unterschiede zu der vorherigen Ausführungsform beschrieben und gleiche oder vergleichbare Bauteile sind mit gleichen Bezugszeichen versehen. Fig. 11

Wir in Fig. 10 und 11 gezeigt, können auf jedem Gelenkbolzen 14 an die Schenkel 9, 10 und Laschen 12, 13 auf jeder Seite der U-Form angrenzend zwei Innenrollen 15 und/oder Außenrollen 16 angeordnet sein. Dargestellt sind dabei jeweils zwei Außenrollen 16 und eine Innenrolle 15. Es versteht sich jedoch, dass zwei Innenrollen vorgesehen sein können oder eine Außenrolle 16 und zwei Innenrollen 15.

**Fig. 12** zeigt eine perspektivische Ansicht der Schubkette 1 der weiteren Ausführungsform der Fig. 10 und 11 mit dem Doppelkettenräder 25 aufweisenden Ritzelantrieb 8 einer Antriebsvorrichtung. Zu erkennen ist, dass der Ritzelantrieb 8 insgesamt zwei Doppelkettenräder 25 aufweist, die auf einer gemeinsamen Antriebswelle 26 des Ritzelantriebs 8 angeordnet sind. Von jedem der Doppelkettenräder 25 greift ein Ritzel bzw. Kettenrad 27 in die Innenrolle(n) 15 und ein Ritzel bzw. Kettenrad 27 in die Außenrollen 16.

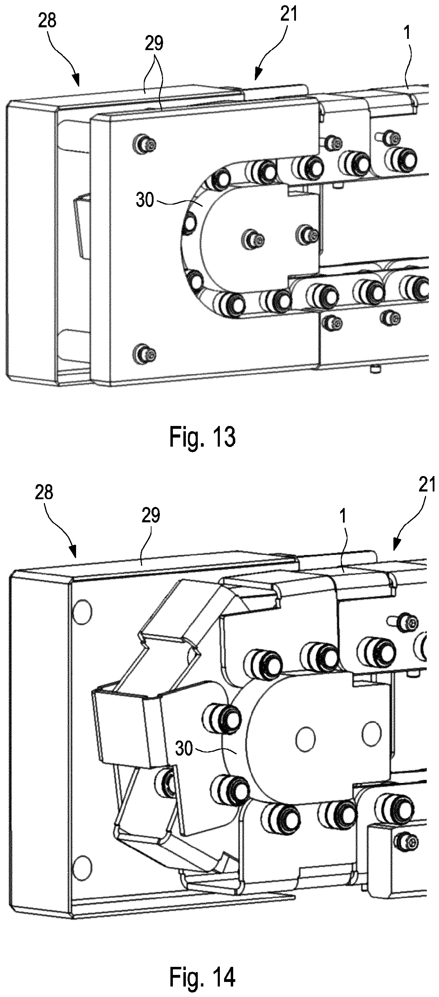

**Fig. 13** zeigt eine Umlenkung 28 eines Kettenspeicher 21 mit geschlossenem Gehäuse 29, der die Außenrollen 16 der Schubkette 1 der weiteren Ausführungsform der Fig. 10 und 11 mittels mindestens einer Umlenkungslaufbahn 30 führt und so die für mögliche Hübe erforderliche Schubkette 1 speichert. **Fig. 14** zeigt die Umlenkung 28 des Kettenspeicher 21 der Fig. 13 mit teilweise geöffnetem Gehäuse 29. Die Umlenkung 28 erlaubt dabei eine Umlenkung der Schubkette um 180°. Auf diese Weise wird eine kompakte Anordnung geschaffen.

Die hierin beschriebene Schubkette 1 und Antriebsvorrichtung mit dem Ritzelantrieb 8 können Teil eines Systems sein. Das System umfasst weiterhin eine Hebebühne. Die Antriebsvorrichtung ist dabei zum wahlweisen Heben oder Senken der Hebebühne ausgebildet. Mit anderen Worten können die hierin beschriebene Schubkette 1 und/oder Antriebsvorrichtung zum wahlweisen Heben oder Senken einer Hebebühne verwendet werden.

### Bezugszeichenliste

- 1: Schubkette
- 2,3: Kettenglieder
- 2: äußere Kettenglieder
- 3: innere Kettenglieder
- 4, 4`: Gelenke
- 5,6, 6': Anschlagflächen
- 5: Anschlagfläche an der Basis des jeweiligen U
- 6: Anschlagfläche an den Schenkeln der U
- 6`: Anschlagfläche an den Laschen 12, 13
- 7: Eingriffselemente
- 8: Ritzelantrieb
- 9: Schenkel der inneren Kettenglieder
- 10: Schenkel der äußeren Kettenglieder
- 11, 11': vollständige U-Form
- 12: in Längsrichtung auskragende Laschen der inneren Kettenglieder
- 13: in Längsrichtung auskragende Laschen der äußeren Kettenglieder
- 14: Gelenkbolzen
- 15: Innenrollen
- 16: Außenrollen
- 17: Führungsschienen
- 18: Bahnen für Außenrollen
- 19: Führungselemente
- 20: Nutführungen
- 21: Kettenspeicher
- 22: Pfeile: Krafteinleitung durch Doppelkettenräder
- 23: Pfeil: Zu hebende Last
- 24: Laufbahnen
- 25: Doppelkettenrad
- 26: Antriebswelle
- 27: Ritzel bzw. Kettenrad
- 28: Umlenkung
- 29: Gehäuse
- 30: Umlenkungslaufbahn

## Patentansprüche

1. Schubkette (1) mit Kettengliedern (2, 3), die durch Gelenke (4, 4') miteinander verbunden sind und Anschlagflächen (5, 6, 6`) aufweisen, wodurch beim Anschlag eine gerade Ausrichtung der Kettenglieder (2, 3) erfolgt, aber die Kettenglieder (2, 3) in der anderen Richtung zueinander verschwenkbar sind und wobei die Kettenglieder (2, 3) Eingriffselemente (7) für einen Ritzelantrieb (8) aufweisen,
**dadurch gekennzeichnet,**
**dass** U-förmige äußere Kettenglieder (2) und U-förmige innere Kettenglieder (3) ineinandergreifend angeordnet sind, wobei die inneren Kettenglieder (3) mit ihren Außenseiten an den Innenseiten der äußeren Kettenglieder (2) anliegen, und wobei die Kettenglieder (2, 3) zur Hälfte ihrer Längsausdehnung eine vollständige U-Form (11, 11') aufweisen, zur anderen Hälfte der Längsausdehnung die Schenkel (9, 10) des U in Längsrichtung auskragende Laschen (12, 13) aufweisen, dass Gelenke (4, 4') sowohl in den Schenkeln (9, 10) als auch in den Laschen (12, 13) derart gelagert sind, dass jedes Gelenk (4, 4') ein äußeres Kettenglied (2) mit einem inneren Kettenglied (3) beweglich verbindet, und dass durch die Abmessungen der Kettenglieder (2, 3) sich diese im gestreckten Zustand der Schubkette (1) mit den Anschlagflächen (5) an den Basen der U abstützen, und sich gleichzeitig alle äußeren Kettenglieder (2) und alle inneren Kettenglieder (3) mit ihren jeweiligen Anschlagflächen (6) an den Schenkeln (9, 10) der U auf den Anschlagflächen (6') der Laschen (12, 13) des nachfolgenden Kettenglieds (2, 3) abstützen.

2. Schubkette nach Anspruch 1,
**dadurch gekennzeichnet,**
**dass** als Eingriffselemente (7) auf den Gelenkbolzen (14), an die Schenkel (9, 10) und Laschen (12, 13) auf jeder Seite der U-Form angrenzende, Innenrollen (15) und Außenrollen (16) angeordnet sind.

3. Schubkette nach Anspruch 2,
**dadurch gekennzeichnet,**
**dass** der Ritzelantrieb (8) aus zwei Doppelkettenrädern zum Eingriff in die Innenrollen (15) und in die Außenrollen (16) besteht.

4. Schubkette nach Anspruch 2 oder 3, wobei auf jedem Gelenkbolzen (14), an die Schenkel (9, 10) und Laschen (12, 13) auf jeder Seite der U-Form angrenzend, mindestens eine Innenrolle (15) und bevorzugt mindestens zwei Innenrollen (15) und mindestens eine Außenrolle (16) und bevorzugt mindestens zwei Außenrollen (16) angeordnet sind.

5. Schubkette nach einem der Ansprüche 1 bis 4,
**dadurch gekennzeichnet,**
**dass** dem Ritzelantrieb (8) zur Erzeugung einer Gegenkraft eine Kulissenführung gegenüberliegt.

6. Schubkettenach einem der Ansprüche 1 bis 5,
**dadurch gekennzeichnet,**
**dass** die Schubkette (1) in Teilbereichen ihrer Bewegungsbahn durch fest angeordnete Führungsschienen (17) geführt ist, die gerade oder in Schwenkrichtung gekrümmt verlaufen können.

7. Schubkette nach Anspruch 6,
**dadurch gekennzeichnet,**
**dass** es sich bei den Führungsschienen (17) um Bahnen (18) für die Außenrollen (16) handelt.

8. Schubkette nach Anspruch 6,
**dadurch gekennzeichnet,**
**dass** an der Basis der U-Formen der äußeren und/oder inneren Kettenglieder (2, 3) Führungselemente (19) angeordnet sind, die in Führungsschienen (17) verlaufen.

9. Schubkette nach Anspruch 8,
**dadurch gekennzeichnet,**
**dass** die Führungselemente (19) und die Führungsschienen (17) beidseitig der Schubkette (1) verlaufende Nutführungen (20) sind.

10. Schubkette nach einem der Ansprüche 6 bis 9,
**dadurch gekennzeichnet,**
**dass** Führungsschienen (17) vor der Krafteinleitung durch den Ritzelantrieb (8) als Kettenspeicher (21) ausgebildet sind, die gerade, gekrümmt oder wechselweise gerade und gekrümmt verlaufen können.

11. Schubkette nach einem der Ansprüche 1 bis 10,
**dadurch gekennzeichnet,**
**dass** sie mit mindestens einer weiteren gleichgearteten Schubkette (1) synchronisiert zusammenwirkt, wobei diese zwei Schubketten (1) sich dadurch gegenseitig stabilisieren, dass sie entgegengesetzt verschwenkbar sind.

12. Schubkette nach Anspruch 11,
**dadurch gekennzeichnet,**
**dass** vier Schubketten (1) synchronisiert zusammenwirken.

13. Antriebsvorrichtung, umfassend
mindestens eine Schubkette (1) nach einem der vorhergehenden Ansprüche, und mindestens einen Ritzelantrieb (8), wobei der Ritzelantrieb (8) in die Eingriffselemente (7) der Schubkette (1) eingreift und zum Antreiben der Schubkette (1) ausgebildet ist.

14. Antriebsvorrichtung nach dem vorhergehenden Anspruch, wobei als Eingriffselemente (7) auf den Gelenkbolzen (14), an die Schenkel (9, 10) und Laschen (12, 13) auf jeder Seite der U-Form angrenzende, Innenrollen (15) und Außenrollen (16) angeordnet sind, wobei der Ritzelantrieb (8) aus zwei Doppelkettenrädern zum Eingriff in die Innenrollen (15) und in die Außenrollen (16) besteht.

15. System, umfassend eine Hebebühne und eine Antriebsvorrichtung nach einem der beiden vorhergehenden Ansprüche, wobei die Antriebsvorrichtung zum wahlweisen Heben oder Senken der Hebebühne ausgebildet ist.

## Claims

1. Thrust chain (1) with chain links (2, 3) connected to each other by joints (4, 4') and having stop surfaces (5, 6, 6'), whereby a straight alignment of the chain links (2, 3) takes place in the case of contact, but the chain links (2, 3) are pivotable in the other direction with respect to each other, and wherein the chain links (2, 3) have engaging elements (7) for a pinion drive (8), **characterized**
**in that** U-shaped outer chain links (2) and U-shaped inner chain links (3) are arranged in an intermeshing manner, wherein the inner chain links (3) bear with their outer sides against the inner sides of the outer chain links (2), and wherein the chain links (2, 3) have a complete U-shape (11, 11') for half of their longitudinal extent, and for the other half of the longitudinal extent the limbs (9, 10) of the U have plates (12, 13) projecting in the longitudinal direction, in that joints (4, 4') are mounted both in the limbs (9, 10) and in the plates (12, 13) in such a way that each joint (4, 4') movably connects an outer chain link (2) to an inner chain link (3), and in that the dimensions of the chain links (2, 3) support them, in the stretched state of the thrust chain (1) with the stop surfaces (5) on the bases of the U, and simultaneously support all outer chain links (2) and all inner chain links (3) with their respective stop surfaces (6) on the limbs (9, 10) of the U on the stop surfaces (6') of the plates (12, 13) of the subsequent chain link (2, 3).

2. Thrust chain according to Claim 1,
**characterized**
**in that**, as engaging elements (7), inner rollers (15) and outer rollers (16) adjoining the limbs (9, 10) and plates (12, 13) on each side of the U-shape are arranged on the joint pins (14).

3. Thrust chain according to Claim 2,
**characterized**
**in that** the pinion drive (8) consists of two double sprockets for engagement into the inner rollers (15) and into the outer rollers (16).

4. Thrust chain according to Claim 2 or 3, wherein at least one inner roller (15) and preferably at least two inner rollers (15) and at least one outer roller (16) and preferably at least two outer rollers (16) are arranged on each joint pin (14), adjoining the limbs (9, 10) and plates (12, 13) on each side of the U-shape.

5. Thrust chain according to one of Claims 1 to 4,
**characterized**
**in that** a slotted guide lies opposite the pinion drive (8) in order to generate a counterforce.

6. Thrust chain according to one of Claims 1 to 5,
**characterized**
**in that** the thrust chain (1) is guided in part regions of its movement path by fixedly arranged guide rails (17) which can run in a manner which is straight or curved in the direction of rotation.

7. Thrust chain according to Claim 6,
**characterized**
**in that** the guide rails (17) are tracks (18) for the outer rollers (16).

8. Thrust chain according to Claim 6,
**characterized**
**in that** guide elements (19) which run in guide rails (17) are arranged at the base of the U-shapes of the outer and/or inner chain links (2, 3).

9. Thrust chain according to Claim 8,
**characterized**
**in that** the guide elements (19) and the guide rails (17) are groove guides (20) running on both sides of the thrust chain (1).

10. Thrust chain according to one of Claims 6 to 9,
**characterized**
**in that** guide rails (17) are configured as chain boxes (21) before force is applied by the pinion drive (8), which chain boxes can run in a manner which is straight, curved or alternately straight and curved.

11. Thrust chain according to one of Claims 1 to 10,
**characterized**
**in that** it interacts in a synchronized manner with at least one other similar thrust chain (1), wherein these two thrust chains (1) stabilize each other in that they can be pivoted in opposite directions.

12. Thrust chain according to Claim 11,
**characterized**
**in that** four thrust chains (1) interact in a synchronized manner.

13. Drive device, comprising
at least one thrust chain (1) according to one of the preceding claims, and
at least one pinion drive (8), wherein the pinion drive (8) engages into the engaging elements (7) of the thrust chain (1) and is configured to drive the thrust chain (1) .

14. Drive device according to the preceding claim, wherein, as engaging elements (7), inner rollers (15) and outer rollers (16) adjoining the limbs (9, 10) and plates (12, 13) on each side of the U-shape are arranged on the joint pins (14), wherein the pinion drive (8) consists of two double sprockets for engagement into the inner rollers (15) and into the outer rollers (16).

15. System comprising a lifting platform and a drive device according to either of the two preceding claims, wherein the drive device is configured to optionally lift or lower the lifting platform.

## Revendications

1. Chaîne de poussée (1) avec des maillons de chaîne (2, 3) qui sont reliés entre eux par des articulations (4, 4') et présentent des surfaces de butée (5, 6, 6'), grâce auxquelles, lors de la butée, il se produit une orientation droite des maillons de chaîne (2, 3), mais les maillons de chaîne (2, 3) sont aptes à pivoter les uns par rapport aux autres dans l'autre sens et les maillons de chaîne (2, 3) présentant des éléments d'engrènement (7) pour un entraînement par pignons (8),
**caractérisée**
**en ce que** des maillons de chaîne extérieurs (2) en forme de U et des maillons de chaîne intérieurs (3) en forme de U sont agencés de manière imbriquée les uns dans les autres, les maillons de chaîne intérieurs (3) s'appliquant par leurs côtés extérieurs contre les côtés intérieurs des maillons de chaîne extérieurs (2), et les maillons de chaîne (2, 3) présentant une forme de U complet (11, 11') pour la moitié de leur extension longitudinale, les branches (9, 10) du U présentant des pattes (12, 13) en saillie dans la direction longitudinale pour l'autre moitié de l'extension longitudinale, **en ce que** des articulations (4, 4') sont montées aussi bien dans les branches (9, 10) que dans les pattes (12, 13) de telle sorte que chaque articulation (4, 4') relie de manière mobile un maillon de chaîne extérieur (2) à un maillon de chaîne intérieur (3), et **en ce que**, grâce aux dimensions des maillons de chaîne (2, 3), ceux-ci s'appuient, à l'état étiré de la chaîne de poussée (1), par les surfaces de butée (5) sur les bases des U, et qu'en même temps, tous les maillons extérieurs (2) et tous les maillons intérieurs (3) s'appuient par leurs surfaces de butée (6) respectives sur les branches (9, 10) du U sur les surfaces de butée (6') des pattes (12, 13) du maillon suivant (2, 3).

2. Chaîne de poussée selon la revendication 1,
**caractérisée**
**en ce que** des galets intérieurs (15) et des galets extérieurs (16) adjacents aux branches (9, 10) et aux pattes (12, 13) de chaque côté de la forme en U sont agencés sur les axes d'articulation (14) en tant qu'éléments d'engagement (7).

3. Chaîne de poussée selon la revendication 2,
**caractérisée**
**en ce que** l'entraînement par pignons (8) est constitué de deux pignons doubles destinés à s'engrener avec les galets intérieurs (15) et les galets extérieurs (16).

4. Chaîne de poussée selon la revendication 2 ou 3, dans laquelle sur chaque axe d'articulation (14), adjacent aux branches (9, 10) et aux pattes (12, 13) de chaque côté de la forme en U, sont agencés au moins un galet intérieur (15), et de préférence au moins deux galets intérieurs (15), et au moins un galet extérieur (16), et de préférence au moins deux galets extérieurs (16) .

5. Chaîne de poussée selon l'une des revendications 1 à 4,
**caractérisée**
**en ce qu'**un guidage à coulisse est placé en face de l'entraînement par pignons (8) pour générer une force antagoniste.

6. Chaîne de poussée selon l'une des revendications 1 à 5,
**caractérisée**
**en ce que** la chaîne de poussée (1) est guidée dans des zones partielles de sa trajectoire de déplacement par des rails de guidage (17) agencés de manière fixe, qui peuvent être droits ou courbés dans le sens de pivotement.

7. Chaîne de poussée selon la revendication 6,
**caractérisée**
**en ce que** les rails de guidage (17) sont des voies (18) pour les galets extérieurs (16).

8. Chaîne de poussée selon la revendication 6,
**caractérisée**
**en ce que** des éléments de guidage (19), qui s'étendent dans des rails de guidage (17), sont agencés à la base des formes en U des maillons de chaîne extérieurs et/ou intérieurs (2, 3).

9. Chaîne de poussée selon la revendication 8,
**caractérisée**
**en ce que** les éléments de guidage (19) et les rails de guidage (17) sont des guides à rainures (20) s'étendant des deux côtés de la chaîne de poussée (1).

10. Chaîne de poussée selon l'une des revendications 6 à 9,
**caractérisée**
**en ce que** les rails de guidage (17) sont conçus, avant l'application de la force par l'entraînement par pignons (8), comme étant des accumulateurs de chaîne (21) qui peuvent être droits, courbes ou alternativement droits et courbes.

11. Chaîne de poussée selon l'une des revendications 1 à 10,
**caractérisée**
**en ce qu'**elle coopère de manière synchronisée avec au moins une autre chaîne de poussée (1) de même type, ces deux chaînes de poussée (1) se stabilisant mutuellement par le fait qu'elles sont aptes à pivoter en sens inverse.

12. Chaîne de poussée selon la revendication 11,
**caractérisée**
**en ce que** quatre chaînes de poussée (1) coopèrent de manière synchronisée.

13. Dispositif d'entraînement comprenant
au moins une chaîne de poussée (1) selon l'une des revendications précédentes, et
au moins un entraînement par pignons (8), l'entraînement par pignons (8) s'engageant dans les éléments d'engrènement (7) de la chaîne de poussée (1) et étant conçu pour entraîner la chaîne de poussée (1).

14. Système d'entraînement selon la revendication précédente, dans lequel des galets internes (15) et des galets externes (16) adjacents aux branches (9, 10) et aux pattes (12, 13) de chaque côté de la forme en U sont agencés en tant qu'éléments d'engrènement (7) sur les axes d'articulation (14), l'entraînement par pignons (8) étant constitué de deux pignons doubles destinés à s'engrener avec les galets internes (15) et les galets externes (16).

15. Système comprenant une plate-forme élévatrice et un dispositif d'entraînement selon l'une des deux revendications précédentes, le dispositif d'entraînement étant configuré pour lever ou abaisser sélectivement la plate-forme élévatrice.
